# EUROPÄISCHE PATENTSCHRIFT

(11) **EP 1 159 558 B1**
(45) Veröffentlichungstag und Bekanntmachung des Hinweises auf die Patenterteilung: **03.12.2003**
(21) Anmeldenummer: 00907655.5
(22) Anmeldetag: 01.03.2000
(51) Int. Cl.: F16L 37/12, F16L 37/42

(54) **BETÄTIGUNGSVORRICHTUNG, INSBESONDERE AN EINER SCHNELLANSCHLUSSKUPPLUNG**
ACTUATION DEVICE, ESPECIALLY ON A RAPID-ACTION RECEPTION COUPLING
DISPOSITIF DE COMMANDE NOTAMMENT D'UN DISPOSITIF D'ACCOUPLEMENT A ACTION RAPIDE

(30) Priorität: 01.03.1999 DE 29903613 U
(43) Veröffentlichungstag der Anmeldung: 05.12.2001
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: EP0001727
(87) Internationale Veröffentlichungsnummer: WO00052378

(56) Entgegenhaltungen:
- DE-A- 3 427 248
- US-A- 5 429 155
- US-A- 5 439 258

## Beschreibung

Die Erfindung betrifft eine Betätigungsvorrichtung, insbesondere an einer Schnellanschlußkupplung für die Übertragung von gasförmigen und/oder flüssigen Fluiden.

Bei derartigen Schnellanschlußkupplungen soll eine sichere und schnelle Anschließbarkeit zum Übertragen eines Fluids von einer Druckquelle, beispielsweise von einer Nachfüllflasche aus erreicht werden. Besonders wichtig ist hierbei die einfache, problemlose Bedienbarkeit der Schnellanschlußkupplung, so daß auch bei ungünstigen Bedingungen, wie gefährlichen Fluiden oder bei hohen Anschlußdrücken eine problemlose Handhabung ermöglicht wird.

Eine derartige Schnellanschlußkupplung ist in der US 5 439 258 A und in der WO 98/04866 des Anmelders beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung eines Steuerungshebels als Betätigungsvorrichtung die Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem zentralen Dichtkolben in Eingriff, der auch den Fluideinlaß nach erfolgtem Anschluß der Steckkupplung freigibt. Obwohl hierdurch eine sichere Anschlußmöglichkeit geschaffen wird, ist der Aufbau dieser Kupplung aufgrund der Vielzahl der Bauteile noch relativ aufwendig. Zudem ist die Handhabung relativ kompliziert, da neben dem Aufstecken der Kupplung das Betätigen des Steuerungshebels erforderlich ist, so daß eine Einhand-Bedienung kaum möglich ist.

Aus der WO-A-93/20378 des Anmelders ist weiterhin ein Schnellanschluß, insbesondere zum Füllen von Gasflaschen bekannt, wobei im Bereich des Auslasses eine Schnellanschlußvorrichtung in Form von Spannzangen mit einem Eingriffprofil vorgesehen ist. Hierbei ist auch ein in dem Kupplungsgehäuse gleitend verschiebbarer, hohler Dichtkolben beschrieben, der über eine mit einer Schiebehülse verbundenen Betätigungseinrichtung für das Schließen bzw. Öffnen der Spannzangen verbunden ist. Auch hier ist ein gesondertes Bedienen der Betätigungsvorrichtung in Form eines Hebels erforderlich, so daß die Handhabung dieses Schnellanschlusses ebenfalls verbesserungsfähig ist.

Demzufolge liegt der Erfindung die Aufgabe zugrunde, eine Betätigungsvorrichtung, insbesondere an einer Schnellanschlußkupplung der eingangs genannten Art oder an Ventilen, zu schaffen, die bei einfachem Aufbau eine sichere und besonders einfache Handhabung ermöglicht.

Diese Aufgabe wird gelöst durch eine Betätigungsvorrichtung, insbesondere an einer Schnellanschlußkupplung, gemäß den Merkmalen des Anspruches 1. Bevorzugte Weiterbildungen der Erfindung sind Gegenstand der Unteransprüche.

Die vorgeschlagene Betätigungsvorrichtung zeichnet sich durch eine geringe Komponentenanzahl, einfache Herstellung sowie eine besonders einfache Bedienung aus, die zudem besonders sicher ist. Insbesondere für die bevorzugte Ausführungsform zur Befüllung von Gastanks mit Gasen wie Propan oder Erdgas wird hierbei beim Anschluß bzw. beim Lösen der Schnellanschlußkupplung sicher vermieden, daß Gas austreten kann. Dies ist insbesondere aus Umweltschutzgründen wichtig, da bei den heute gebräuchlichen Anschlußkupplungen bei jedem Füllvorgang noch ein erhebliches Gasvolumen verlorengeht, das sich im Schlauch zwischen der Nachfüll-Gasflasche und der Anschlußkupplung befindet und beim An- bzw. Abkuppeln entweichen kann.

Es sei darauf hingewiesen, daß sich die vorgeschlagene Betätigungsvorrichtung, insbesondere an einer Schnellanschlußkupplung, für verschiedene Anschlußformen eignet, aber auch nur zur Schaltung von Ventilen. Zum Anschluß der Kupplung können auch Profilformen wie Außen-/Innengewinde, Einstiche oder Wülste an dem Anschlußnippel vorgesehen sein, wobei die gegenüberliegende Spannzangenform korrespondierend ausgebildet ist. Durch den mit der Betätigungsvorrichtung verschiebbaren Hebelmechanismus wird hierbei eine sichere Verriegelung der Spannzangen oder ähnlicher Verriegelungselemente ermöglicht. Von besonderer Bedeutung ist die Realisierung der Betätigungsvorrichtung, insbesondere an einer Schnellanschlußkupplung, mittels einem äußeren Schiebering, so daß auf besonders einfache Weise eine sichere und schnelle Einhand-Bedienung der Schnellanschlußkupplung ermöglicht wird.

Nachfolgend wird ein Ausführungsbeispiel anhand der beiliegenden Zeichnungen näher erläutert und beschrieben. Hierin zeigen:
- Fig. 1: eine Seitenansicht einer Schnellanschlußkupplung für einen Anschlußnippel mit einem Anschlußprofil, wobei die Schnellanschlußkupplung im Längs-Halbschnitt und in der Stellung vor dem Anschluß dargestellt ist;
- Fig. 2: eine Darstellung der Schnellanschlußkupplung gemäß Fig. 1, jedoch in angeschlossener Stellung an den Anschlußnippel;
- Fig. 3: eine abgewandelte Ausführungsform ähnlich Fig. 1;
- Fig. 4: die abgewandelte Ausführungsform gemäß Fig. 3, jedoch in Anschlußstellung;
- Fig. 5: eine weiterhin abgewandelte Ausführungsform ähnlich Fig. 1 in Anschlußstellung; und
- Fig. 6: die weiterhin abgewandelte Ausführungsform gemäß Fig. 5.

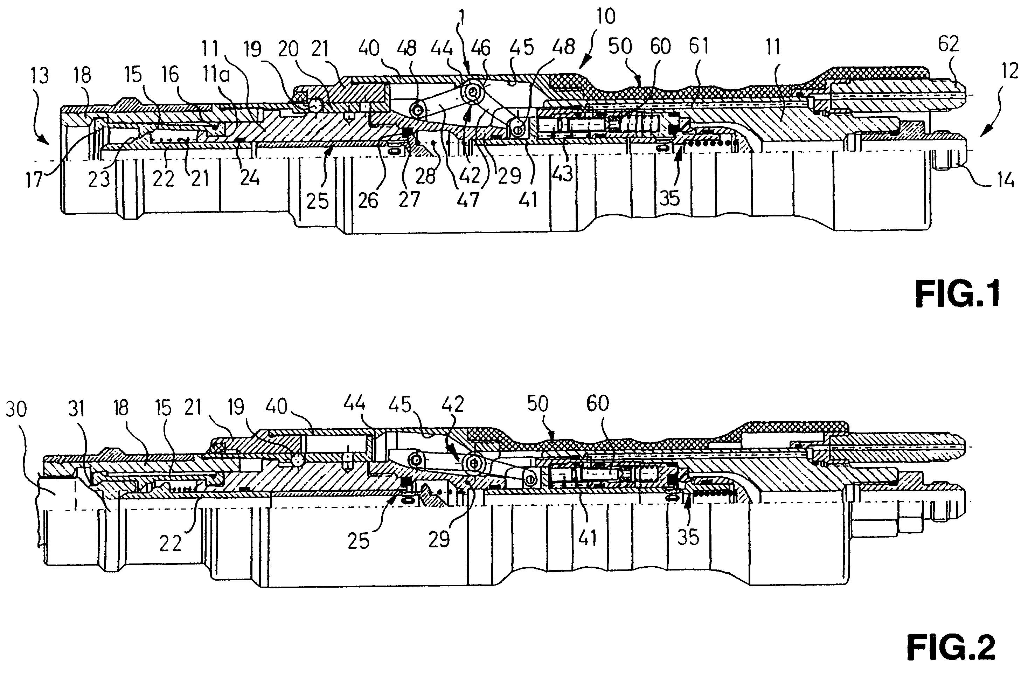

In Fig. 1 ist ein bevorzugtes Ausführungsbeispiel einer Betätigungsvorrichtung 1 an einer Schnellanschlußkupplung 10 vor dem Anschluß an einen Anschlußnippel 30 (vgl. Fig. 2) gezeigt. Die Schnellanschlußkupplung 10 weist ein rohrförmiges Gehäuse 11 bzw. miteinander verbundene Gehäuseteile auf, wobei hier die rechte Stirnseite als Einlaß 12 dient und die linke Stirnseite als Auslaß 13 für die Weiterleitung des zu übertragenden Fluids an den Anschlußnippel 30. Der Einlaß 12 zu dem Gehäuse 11 weist einen Anschlußadapter 14 auf, der an einen Schlauch oder eine Rohrleitung zur Zuführung des zu übertragenden Fluids angeschlossen werden kann. Der Anschlußadapter 14 kann hierbei in Anpassung an das zu übertragende Fluid, insbesondere an die jeweils gewünschten Zuführwinkel, Durchlaßquerschnitte usw. gestaltet sein.

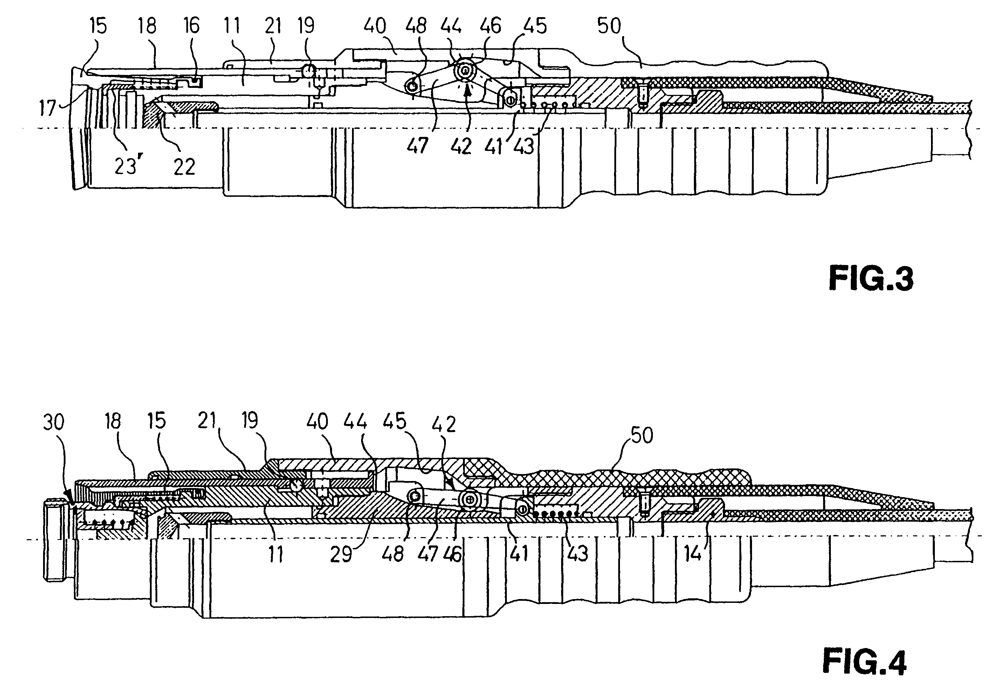

Auf der dem Anschlußadapter 14 gegenüberliegenden Stirnseite, hier dem Auslaß 13, sind mehrere in Rohrform angeordnete, längliche Spannzangen 15 als Verriegelungselemente vorgesehen, die in der hier dargestellten Stellung kurz vor dem Aufstecken auf den Anschlußnippel 30 radial nach außen aufgespreizt sind, wie dies beispielsweise auch in der vorstehend genannten WO-A-93/20378 dargestellt ist. Die länglichen Spannzangen 15, von denen um das Gehäuse 11 herum wenigstens eine, im allgemeinen drei oder sechs Spannzangen angeordnet sind, sind an ihrem hier rechten Ende an einer Ringnut 11a des Gehäuses 11 eingehängt und dabei durch eine Ringfeder 16 vorgespannt, so daß die Spannzangen 15 radial nach außen aufgespreizt werden. Dies wird unterstützt durch eine radiale Verdickung 23 bzw. einen gesonderten Ring 23' (vgl. Fig. 3). An dem hier linken Ende an der nach innen abgekröpftem Fläche weisen die Spannzangen 15 jeweils korrespondierend zu dem Anschlußprofil 31 (vgl. Fig. 2) des Anschlußnippels 30 ausgebildete formschlüssige Eingriffsprofile 17 auf.

Um die Spannzangen 15 herum ist eine äußere Schiebehülse 18 vorgesehen, die an dem zylindrischen Außenmantel des Gehäuses 11 geführt ist und mit der Betätigungsvorrichtung 1 in Richtung zum Anschlußnippel 30 axial vorgeschoben werden kann, wie dies untenstehend beschrieben wird. Die Schiebehülse 18 weist hierbei eine Verlängerung 20 auf, in der eine Verriegelungskugel 19 lose gehalten ist. An deren Umfang ist ein Verriegelungsring 21 angeordnet, der in Anschlußstellung (Fig. 2) die Verriegelungskugel 19 in eine Nut am Gehäuse 11 drückt und dadurch die Axialverschiebung der Schiebehülse 18 ermöglicht, wodurch die Spannzangen 15 durch den Umgriff mittels der Schiebehülse 18 in der Anschlußstellung arretiert werden.

An der zum Auslaß 13 hin gelegenen Innenfläche des Gehäuses 11 ist ein von einer Feder 21 beaufschlagter Dichtkolben 22 geführt, der mit seiner vorderen Stirnseite an einer konisch ausgeführten Dichtfläche des Anschlußnippels 30 anliegt. Der Dichtkolben 22 ist gegenüber den Spannzangen 15 mittels eines am vorderen Ende des Gehäuses 11 eingesetzten Dichtungsringes 24 abgedichtet, so daß das im wesentlichen entlang der Zentralachse der Schnellanschlußkupplung 10 strömende gasförmige und/oder flüssige Fluid nicht nach außen hin austreten kann.

Von Bedeutung ist weiterhin ein zentral im Gehäuse 11 gelagertes Auslaßventil 25, das mittels eines Dichtringes 26 an dem Gehäuse 11 gegenüber einer Dichtfläche 27 in geschlossener Stellung abdichtet. Das Auslaßventil 25 ist hierbei von einer Druckfeder 28 beaufschlagt, die mittels eines mit dem Gehäuse 11 verbundenen Zentriereinsatzes 29 geführt ist. Durch dieses Auslaßventil 25 wird sichergestellt, daß in der hier dargestellten abgekuppelten Position bzw. bis kurz vor dem Anschluß der Schnellanschlußkupplung 10 an den Anschlußnippel 30 das durch den Anschlußadapter 14 zugeführte Fluid auch bei geöffnetem Anschlußhahn an der Nachfüllflasche oder Betankungsanlage nicht ausströmen kann.

Das Auslaßventil 25 wird beim Aufstecken der Schnellanschlußkupplung 10 auf den Anschlußnippel 30 vom Dichtkolben 22 beaufschlagt, wobei letzterer beim Anschließen axial eingedrückt wird und hierbei das Auslaßventil 25 öffnet. Hierbei ist jedoch noch ein Einlaßventil 35 der Schnellanschlußkupplung 10 geschlossen, das dann erst in der weiteren Kupplungsabfolge von der Betätigungsvorrichtung 1 bzw. einem zugehörigen Schieber 41 geöffnet wird.

Von besonderer Bedeutung ist hierbei ein am Außenumfang des Gehäuses 11 geführter Schiebering 40, der mit dem Verriegelungsring 21 verschraubt ist und über einen Hebelmechanismus 42 den Schieber 41 beaufschlagt. Der Schieber 41 wird hierbei im Gehäuse 11, genauer dem damit verbundenen Zentriereinsatz 29, geführt und von einer Druckfeder 43 beaufschlagt. Wie aus der Darstellung ersichtlich, ist die zum Auslaß 13 hin weisende Seite des Schieberings 40 mit dem Verriegelungsring 21 verschraubt, wodurch dieser aus der Öffnungsstellung (Fig. 1) in die Anschluß- oder Verriegelungsstellung (Fig. 2) verschiebbar ist. Der Schiebering 40 wird hierbei mit einem Handgriff 50 manuell verschoben (hier nach links), so daß der Hebelmechanismus 42 in die gestreckte Lage verschoben wird, wodurch zugleich ein Anschlag 44 des Schieberings 40 an dem Verriegelungsring 21 erreicht wird. Ausgehend vom Anschlag 44 ist im Innern des Schieberings 40 für den Hebelmechanismus 42 ein abgestuftes Mitnehmerprofil 45 vorgesehen, das die Bewegung dieser beiden Bauteile zueinander steuert.

Der Hebelmechanismus 42 besteht hierbei aus einer mittig angeordneten Rolle 46 und zwei Hebeln 47, deren Enden über Bolzen 48 einerseits am Gehäuse 11 bzw. dem damit verbundenen Zentrierabsatz 29 befestigt sind und andererseits am Schieber 41. Bei der Verschiebebewegung des Schieberings 40 durch den Handgriff 50 bewegt sich die Rolle 46 entlang dem Mitnehmerprofil 45, so daß die Hebel 47 gestreckt werden. Hierdurch wird der Schieber 41 gegen das Einlaßventil 35 gedrückt, so daß dieses in die Offenstellung bewegt wird. Der Schieber 41 wird dabei von einer Druckfeder beaufschlagt, so daß die Rolle 46 jeweils an dem Mitnehmerprofil 45 an der Innenfläche des Schieberings 40 anliegt. In bevorzugter Weise ist dabei der Schieber 41 nicht nur zur gesteuerten Öffnung des Einlaßventils 35 vorgesehen, sondern ebenfalls zur Betätigung eines Entlüftungsventils 60. Dieses führt über eine im Gehäuse 11 angeordnete Bohrung 61 zu einem Entlüftungsanschluß 62, so daß in der Anschlußkupplung verbleibendes Gas oder Fluid zurückgeführt werden kann. Dieses von dem Schieber 41 ebenfalls mitbetätigte Entlüftungsventil 60 erleichtert zudem das Abkuppeln, da hierdurch ein definierter Druckabbau erfolgen kann. Hinsichtlich des Mitnehmerprofils 45, an dem der kniehebelartige Hebelmechanismus 42 mit der Rolle 46 anliegt, sei darauf hingewiesen, daß die hier gezeigte abgestufte Form auch durch einen kontinuierlichen Übergang verwirklicht werden kann, um die hier wesentliche Kraftübersetzung zu realisieren. Dabei könnten die Hebel 47 auch an dem Schiebering 40 gelagert sein, während die Rolle 46 gehäuseseitig abrollen kann, beispielsweise an dem Einsatz 29 oder auch dem Schieber 41.

Die hier gezeigte abgestufte Form des Mitnehmerprofils 45 weist insbesondere den Vorteil auf, daß durch die anfänglich geringe Steigung beim Abrollen der Rolle 46 auf der Innenfläche des Schieberinges 40 bei dessen Verschiebung eine große Kraftübersetzung erreicht wird, so daß der damit verbundene Schieber 41 sehr hohe Ventilöffnungskräfte, z. B. auf das Einlaßventil 35 und das Entlüftungsventil 60, aufbringen kann. Diese Übersetzung wird auch durch die Hebellängen der Hebel 47 des Hebelmechanismus 42 unterstützt. Dabei sei darauf hingewiesen, daß ein derartiger Hebelmechanismus 42 in symmetrischer Weise auch im hier unteren Bereich innerhalb des Schieberinges 40 angeordnet sein kann, ggf. auch in Mehrfachanordnung.

In Fig. 2 ist die Anschlußstellung der Schnellanschlußkupplung 10 dargestellt. Wie ersichtlich, wird beim Aufstecken der Schnellanschlußkupplung 10 auf den Anschlußnippel 30 der Dichtkolben 22 nach rechts verschoben, wobei zugleich der am Außenumfang vorgesehene Schiebering 40 mit dem Handgriff 50 nach links verschoben wird. Nach einem geringen Weg von einigen Millimetern werden die an der konischen Außenfläche 23 des Dichtkolbens 22 anliegenden Innenflächen der Spannzangen 15 aus ihrer Sperrstellung frei, so daß diese nach innen schnappen können und somit das Eingriffsprofil 17 an dem korrespondierend ausgebildeten Anschlußprofil 31 des Anschlußnippels 30 eingreift. Hierdurch wird praktisch zeitgleich die Schiebehülse 18 und deren Verriegelungskugel 19 für die axiale Bewegung nach links frei, da die Schiebehülse 18 ebenfalls von der Betätigungsvorrichtung 1 über den Schiebering 40 und den Verriegelungsring 21 beaufschlagt wird. Durch die Axialbewegung der Schiebehülse 18 greift diese über die radial äußeren Enden der Spannzangen 15, so daß diese in ihrer Eingriffsstellung am Anschlußnippel 30 formschlüssig gehalten werden.

Zum Lösen der Schnellanschlußkupplung 10 und damit dem Zurückführen der in Fig. 2 dargestellten Anschlußstellung in die Öffnungsstellung gemäß Fig. 1 wird der Schiebering 40 mit dem profilierten Handgriff 50 per Hand etwas zurückgezogen. Nach einem kurzen Weg des Verriegelungsrings 21 (nach rechts) wird zunächst die Verriegelungskugel 19 (nach außen) freigegeben, wodurch zugleich die Schiebehülse 18 zurückgezogen wird. Damit können die Spannzangen 15 sich wieder radial nach außen aufspreizen, wobei simultan der Schieber 41 über den Hebelmechanismus 42 hier nach links zum Auslaßende 13 hin verschoben wird. Aufgrund des kurvenförmigen Mitnehmerprofiles 45 kann diese Hubbewegung des Schieberings 40 und damit des Schiebers 41 zur Steuerung des Einlaßventils 35 sehr exakt erfolgen. Bevor sich somit der Dichtkontakt zwischen dem Dichtkolben 22 und der Dichtfläche des Anschlußnippels 30 löst, wird zudem das Auslaßventil 25 sicher geschlossen. Durch diese praktisch fast gleichzeitige Abfolge wird ein sehr schnelles Schließen der Ein- bzw. Auslaßventile 35 und 25 erreicht, so daß kein Fluidvolumen austreten kann.

Der Schiebering 40, zusammen mit dem Hebelmechanismus 42, erlaubt zudem ein sicheres Aufstecken der Schnellanschlußkupplung 10 auf den Anschlußnippel 30, wobei die Spannzangen 15 erst geschlossen werden, wenn der Dichtkontakt sichergestellt ist, da die Öffnungsstellung der Spannzangen 15 so lange aufrechterhalten wird, bis von der Axialverschiebung des Dichtkolbens 22 und des Schieberings 40 in direkter Reihenfolge die Öffnungsstellung der Spannzangen 15 gelöst wird, um den Anschluß herzustellen.

In den Fig. 3 und 4 ist eine vereinfachte Ausführung dargestellt, wobei korrespondierende Bauteile mit dem gleichen Bezugszeichen wie in Fig. 1 und 2 bezeichnet sind. Die Betätigungsvorrichtung 1 weist dabei die gleiche Funktion wie bei Fig. 1 und 2 beschrieben auf. Im Unterschied zu der Ausführungsform in Fig. 1 und 2 sind hierbei jedoch keine Einlaßventile oder Entlüftungsventile vorgesehen, da die hier dargestellte Schnellanschlußkupplung insbesondere für die Propangas-Befüllung geeignet sein soll. Der hier wesentliche Hebelmechanismus 42 weist jedoch den gleichen Aufbau auf, wobei der davon betätigte Schieber 41 hier mit dem vorderen Dichtkolben 22 verbunden ist. In Fig. 3 bildet der Dichtkolben 22 somit ein geschlossenes Ventil, während der Dichtkolben in der Fig. 4 durch die Axialbewegung des Schiebers 41 hier nach rechts den Gasdurchlaß freigibt, also somit als Auslaßventil dient. An dem Anschlußadapter 14 ist zudem hier eine Schlauchleitung angeschlossen, die von einer Knickschutzummantelung umgeben ist. Diese Ummantelung ist wiederum in der Nicht-Anschlußstellung von dem Handgriff 50 weitgehend umgeben, der zum Anschluß zum Anschlußnippel 30 hin verschoben wird, wobei neben der oben beschriebenen Freigabe der hier einstückig ausgebildeten Schiebehülse 18 (also ohne Verlängerung 20) auch der Hebelmechanismus 42 in die gestreckte Form gebracht wird.

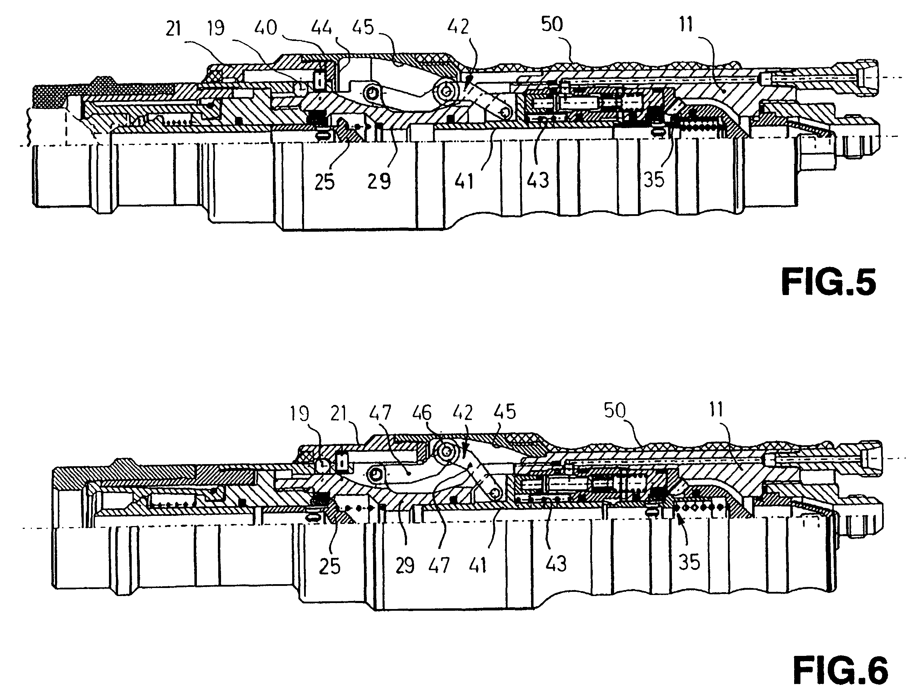

In den Fig. 5 und 6 ist eine weitere Ausführung dargestellt, wobei korrespondierende Bauteile mit dem gleichen Bezugszeichen wie in Fig. 1 und 2 bezeichnet sind. Die Betätigungsvorrichtung 1 weist dabei die gleiche Funktion wie bei Fig. 1 und 2 beschrieben auf. Im Unterschied zu der Ausführungsform in Fig. 1 und 2 sind hierbei jedoch die Hebel 47 des hier wesentlichen Hebelmechanismus 42 bei ansonsten gleichem Aufbau gekröpft. Dadurch wird die Baulänge verkürzt und das Übersetzungsverhältnis noch verbessert.

## Patentansprüche

1. Betätigungsvorrichtung, insbesondere an einer Schnellanschlußkupplung für die Übertragung von gasförmigen und/oder flüssigen Fluiden oder an Ventilen, mit einem rohrförmigen Gehäuse (11, 29) und einem gegenüber dem Gehäuse verschiebbar gelagerten Schieber (41), der mit einem Hebelmechanismus (42) verbunden ist,
**dadurch gekennzeichnet, daß**
der Hebelmechanismus (42) in einem Schiebering (40) angeordnet ist, der relativ zum Gehäuse (11, 29) verschiebbar gelagert ist, wobei der Hebelmechanismus (42) aus zwei Hebeln (47) mit einer etwa mittig angeordneten Rolle (46) besteht und einerseits am Gehäuse (11, 29) und andererseits am Schieber (41) befestigt ist.

2. Betätigungsvorrichtung nach Anspruch 1,
**dadurch gekennzeichnet, daß**
eine gemeinsame, auf den Hebelmechanismus (42) und den Schieber (41) wirkende Druckfeder (43) vorgesehen ist.

3. Betätigungsvorrichtung nach Anspruch 1 oder 2,
**dadurch gekennzeichnet, daß**
an der Innenfläche des Schieberings (40) ein abgestuftes Mitnehmerprofil (45) vorgesehen ist.

4. Betätigungsvorrichtung nach Anspruch 3,
**dadurch gekennzeichnet, daß**
das Mitnehmerprofil (45) einen Anschlag (44) aufweist.

5. Betätigungsvorrichtung nach einem der Ansprüche 1 bis 4,
**dadurch gekennzeichnet, daß**
der Schiebering (40) auf der Außenumfangsfläche des Gehäuses (11, 29) geführt ist.

6. Betätigungsvorrichtung nach einem der Ansprüche 1 bis 5,
**dadurch gekennzeichnet, daß**
zentral im Gehäuse (11) ein Auslaßventil (25) und/oder ein Einlaßventil (35) und/oder ein Entlüftungsventil (60) angeordnet ist, das vom Schieber (41) betätigbar ist.

7. Betätigungsvorrichtung nach einem der Ansprüche 1 bis 6,
**dadurch gekennzeichnet, daß**
der Schiebering (40) mit einem Verriegelungsring (21) verbunden ist, insbesondere verschraubt ist.

8. Betätigungsvorrichtung nach einem der Ansprüche 1 bis 7,
**dadurch gekennzeichnet, daß**
der Schiebering (40) mit einem Verriegelungselement (19), insbesondere einer Kugel, gegenüber dem Gehäuse (11, 29) in wenigstens einer End-Stellung arretierbar ist.

9. Betätigungsvorrichtung nach einem der Ansprüche 1 bis 8, **dadurch gekennzeichnet, daß** wenigstens zwei Hebelmechanismen (42) spiegelbildlich zur Hauptachse des Zentriereinsatzes (29) angeordnet sind.

10. Betätigungsvorrichtung nach einem der Ansprüche 1 bis 9, **dadurch gekennzeichnet, daß** der Schiebering (40) mit einem Handgriff (50) oder dem Schieber (41) verbunden ist.

11. Betätigungsvorrichtung nach einem der Ansprüche 3 bis 10, **dadurch gekennzeichnet, daß** das Mitnehmerprofil (45) am Gehäuse (11, 29), insbesondere an der Umfangsfläche des Zentriereinsatzes (29) ausgebildet ist.

12. Betätigungsvorrichtung nach einem der Ansprüche 3 bis 11, **dadurch gekennzeichnet, daß** das Mitnehmerprofil (45) eine anfänglich flachere Steigung zur Erzeugung einer größeren Kraftübersetzung aufweist.

## Claims

1. Actuation device, in particular on a rapid-action reception coupling for transferring gas-liquids and/or liquid-liquids or on valves, comprising a tubular housing (11, 29) and a slide (41) mounted such that it is displaceable relative to the housing, which is attached to a lever mechanism (42),
**characterised in that**
the lever mechanism (42) is positioned in a sliding ring (40) mounted such that it is displaceable relative to the housing (11, 29), wherein the lever mechanism (42) consists of two levers (47) with a roller (46) positioned approximately in the centre and is attached on one side to the housing (11, 29) and on the other side to the slide (41).

2. Actuation device as claimed in Claim 1, **characterised in that** a common compression spring (43) is provided working on the lever mechanism (42) and the slide (41).

3. Actuation device as claimed in Claim 1 or 2, **characterised in that** a stepped carrier profile (45) is provided on the inner surface of the sliding ring (40).

4. Actuation device as claimed in Claim 3, **characterised in that** the carrier profile (45) exhibits a stop (44).

5. Actuation device as claimed in any one of Claims 1 to 4, **characterised in that** the sliding ring (40) is guided on the recessed surface of the housing (11, 29).

6. Actuation device as claimed in any one of Claims 1 to 5, **characterised in that** an outlet valve (25) and/or an inlet valve (35) and/or a ventilation valve (60), which can be actuated by the slide (41), is arranged centrally in the housing (11).

7. Actuation device as claimed in any one of Claims 1 to 6, **characterised in that** the sliding ring (40) is attached by a locking ring (21), in particular by a screw.

8. Actuation device as claimed in any one of Claims 1 to 7, **characterised in that** the sliding ring (40) can be checked by a locking element (19), in particular a ball, relative to the housing (11, 29) in at least one end position.

9. Actuation device as claimed in any one of Claims 1 to 8, **characterised in that** at least two lever mechanisms (42) are arranged mirroring the main axis of the centering insert (29).

10. Actuation device as claimed in any one of Claims 1 to 9, **characterised in that** the sliding ring (40) is attached to a hand grip (50) or the slide (41).

11. Actuation device as claimed in any one of Claims 3 to 10, **characterised in that** the carrier profile (45) is integrated on the housing (11, 29), in particular on the peripheral surface of the centering insert (29).

12. Actuation device as claimed in any one of Claims 3 to 11, **characterised in that** the carrier profile (45) at first exhibits a flatter elevation to create greater transmission of force.

## Revendications

1. Dispositif d'actionnement, notamment sur un raccord rapide pour la transmission de fluides gazeux et/ou liquides ou sur des soupapes, avec un boîtier tubulaire (11, 29) et un poussoir (41) qui est monté à coulissement par rapport au boîtier et qui est relié à un mécanisme à leviers (42),
**caractérisé en ce que** le mécanisme à leviers (42) est disposé dans une bague coulissante (40) qui est montée à coulissement par rapport au boîtier (11, 29), le mécanisme à leviers (42) étant constitué de deux leviers (47) avec un galet (46) disposé approximativement centralement, et étant fixé d'une part sur le boîtier (11, 29) et d'autre part sur le poussoir (41).

2. Dispositif d'actionnement selon la revendication 1, **caractérisé en ce qu'**il est prévu un ressort de pression commun (43), agissant sur le mécanisme à leviers (42) et sur le poussoir (41).

3. Dispositif d'actionnement selon la revendication 1 ou 2, **caractérisé en ce qu'**un profil entraîneur étagé (45) est prévu sur la face intérieure de la bague coulissante (40).

4. Dispositif d'actionnement selon la revendication 3, **caractérisé en ce que** le profil entraîneur (45) présente une butée (44).

5. Dispositif d'actionnement selon l'une des revendications 1 à 4, **caractérisé en ce que** la bague coulissante (40) est guidée sur la face périphérique extérieure du boîtier (11, 29).

6. Dispositif d'actionnement selon l'une des revendications 1 à 5, **caractérisé en ce qu'**une soupape d'échappement (25) et/ou une soupape d'admission (35) et/ou une soupape d'évacuation d'air (60) est (sont) disposée(s) centralement dans le boîtier (11) et peut (peuvent) être actionnée(s) par le poussoir (41).

7. Dispositif d'actionnement selon l'une des revendications 1 à 6, **caractérisé en ce que** la bague coulissante (40) est assemblée à une bague de verrouillage (21), notamment par vissage.

8. Dispositif d'actionnement selon l'une des revendications 1 à 7, **caractérisé en ce que** la bague coulissante (40) peut être bloquée dans au moins une position finale par rapport au boîtier (11, 29) par un élément de verrouillage (19), notamment une bille.

9. Dispositif d'actionnement selon l'une des revendications 1 à 8, **caractérisé en ce qu'**au moins deux mécanismes à leviers (42) sont disposés symétriquement par rapport à l'axe principal de l'insert de centrage (29).

10. Dispositif d'actionnement selon l'une des revendications 1 à 9, **caractérisé en ce que** la bague coulissante (40) est assemblée à une poignée (50) ou au poussoir (41).

11. Dispositif d'actionnement selon l'une des revendications 3 à 10, **caractérisé en ce que** le profil entraîneur (45) est configuré sur le boîtier (11, 29), notamment sur la face périphérique de l'insert de centrage (29).

12. Dispositif d'actionnement selon l'une des revendications 3 à 11, **caractérisé en ce que** le profil entraîneur (45) présente une pente initialement plus plate, afin de produire une plus grande multiplication de force.
